Europäisches Patentamt

European Patent Office

Office européen des brevets

(19)

(11) Veröffentlichungsnummer: **0 307 609**
**A1**

(12) ## EUROPÄISCHE PATENTANMELDUNG

(21) Anmeldenummer: 88112745.0

(22) Anmeldetag: 04.08.88

(51) Int. Cl.⁴: **F16L 58/10**

(30) Priorität: 17.09.87 DE 3731282
07.03.88 DE 3807425

(43) Veröffentlichungstag der Anmeldung:
**22.03.89 Patentblatt 89/12**

(84) Benannte Vertragsstaaten:
**BE DE FR GB IT LU NL**

(71) Anmelder: **Schmelzbasaltwerk Kalenborn
Dr.Ing. Mauritz GmbH & Co. KG**

**D-5467 Vettelschoss 2(DE)**

(72) Erfinder: **Hecken, Walter
Hauptstrasse 1
D-5469 Windhagen(DE)**
Erfinder: **Grüber, Alfons
Beethovenstrasse 48
D-5460 Linz/Rhein(DE)**

(74) Vertreter: **Lewald, Dietrich, Dipl.-Ing. et al
Patentanwälte Müller-Boré, Deufel, Schön,
Hertel Lewald, Otto Isartorplatz 6 Postfach 26
02 47
D-8000 München 26(DE)**

(54) **Rohr mit Innenauskleidung, insbes. als Schutz gegen chemische Angriffe bei hohen Betriebsdrücken.**

(57) Die Erfindung betrifft ein Rohr (10) mit Innenauskleidung, insbesondere als Schutz gegen chemische Angriffe und Korrosion bei hohen Betriebsdrücken und zeichnet sich insbesondere dadurch aus, daß für eine korrosionssichere, gleitfördernde und verschleißfeste Ausbildung das Verbundrohr aus einem Stahlmantelrohr (10), einem sogenannten Inliner (12) aus Kunststoff, insbesondere aus einem thermoplastischen Rohr besteht und die Verbindung zwischen thermoplastischem Rohr und Stahlrohr aus einem geschäumten Kunststoff besteht.

EP 0 307 609 A1

F I G. 1

## Rohr mit Innenauskleidung, insbesondere als Schutz gegen chemische Angriffe bei hohen Betriebsdrücken

Die Erfindung betrifft ein Rohr mit Innenauskleidung, insbesondere als Schutz gegen chemische Angriffe und Korrosion bei hohen Betriebsdrücken.

Verschleiß und Korrosion treten nicht nur in Rauchgasentschwefelungsanlagen oder chemischen Fabriken sondern allgemein überall dort auf, wo vor allen Dingen flüssige, gegebenenfalls mit Feststoff beladene Materialien durch Rohrleitungen transportiert werden. Dies gilt auch für hier zur Anwendung kommende Rohrkettenförderer.

Bekannt sind Rohre, die über eine verschleißfeste Innenauskleidung verfügen. Alternativ sind Rohre mit Innenbeschichtungen gegen chemische Angriffe und Korrosion und weiterhin lediglich aus thermoplastischen Werkstoffen bestehende Rohre, allerdings mit sehr dicker Wand, um den auftretenden Betriebsdrücken standzuhalten, bekannt.
Bei solchen Rohren liegt der Erfindung die Aufgabe zugrunde, ein innen glattes Rohr anzugeben, das außen sehr steif ist und bei dem selbst dann, wenn das Innenrohr beschädigt wird, das Außenrohr keinem Korrosionsangriff oder dergleichen ausgesetzt wird.

Erreicht wird dies erfindungsgemäß überraschend dadurch, daß bei einem Rohr mit Innenauskleidung, insbesondere als Schutz gegen chemische Angriffe und Korrosion bei hohen Betriebsdrücken
für eine korrosionssichere, gleitfördernde und verschleißfeste Ausbildung das Verbundrohr aus einem Stahlmantelrohr, weiter aus einem sogenannten Inliner aus Kunststoff, insbesondere aus einem thermoplastischen Rohr, besteht, wobei die Verbindung zwischen thermoplastischem Rohr und Stahlrohr aus einem geschäumten Kunststoff besteht.

Vorzugsweise sind Innenrohr sowie Ringspaltfüllung aus Polyurethanschaum flüssigkeitsdicht bzw. gasdicht ausgebildet.
Erreicht wird eine Aufteilung der statischen Funktion des Verbundrohres auf den Stahlmantel und ausgeschäumten Ringspalt und die Antiverschleiß- bzw. Korrosionsschutzfunktion auf das thermoplastische Innenrohr.

Durch die Maßnahmen nach der Erfindung ergeben sich eine ganze Reihe Vorteile:

Durch das dreischichtige Verbundrohr wird die Aufgabe mit relativ geringem Material- und Produktionsaufwand gelöst.

Es wird erreicht, daß das Rohr innen glatt ist, also einen möglichst geringen Reibungswiderstand bietet.
Der Verschleiß und die Antriebsleistung, insbesondere bei einem Rohrkettenförderer, können gering gehalten werden.

Bisherige als Korrosionsschutz mit Innenbeschichtung versehene Rohre, wobei die Innenbeschichtung direkt auf die Stahlwand aufgebracht werden musste, machen komplizierte Aufspritz- Einschleuder- oder Aufbrennvorgänge im Autoklaven notwendig. Stellte sich eine Beschädigung der Innenauskleidung ein, so drangen die Förderflüssigkeit oder die chemischen Bestandteile des Fördergutes an dieser Stelle sofort bis zum Stahlrohr durch und griffen dieses an. Korrosion oder andere chemische Reaktionen zerstörten das Stahlrohr.

Durch die Maßnahmen nach der Erfindung werden Beschädigungen dieser Art weitestgehend vermieden bzw. eingeschränkt.

Als Innenrohr kann ein thermoplastisches Rohr, ein PE-Rohr oder dergleichen Verwendung finden.

Jeder schäumbare Kunststoff, der die Aufgabe der Verbindung des Stahlrohres mit dem thermoplastischen Innenrohr garantiert, kann verwendet werden. Vorzugsweise wird mit Polyurethan ausgeschäumt.

Bereits das thermoplastische Rohr bietet einen großen Widerstand gegen mechanische Beanspruchungen, wie sie durch die Förderung von flüssigem Gut mit geringem Anteil an Feststoffen auftreten. Die zweite Schutzschicht ergibt sich durch die Polyurethanhinterfüllung. Dadurch wird in der Regel ein Durchdringen der Flüssigkeit oder ein Durchdringen der Gase bis zum Stahlmantel vermieden.

Vorzugsweise sind Abstandshalter, insbesondere aus auf das Innenrohr aufgeschweißtem thermoplastischen Material wie PE zur Sicherung der koaxialen Lage des Innenrohrs vorgesehen. Dadurch wird das thermoplastische Rohr unter gleichmässigem Abstand vom Stahlrohr arretiert. Die Eigenschaften und die Dicke sind auf die Druckverhältnisse abzustimmen.

Der Ringspalt zwischen dem thermoplastischen Innenrohr und dem Stahlrohr wird nun mit Polyurethan oder einem anderen schäumenden Kunststoff ausgefüllt. Die Füllmenge muß so sein, daß der beim Schäumen oder der Reaktion sich ausbildende Druck einerseits das thermoplastische Rohr nicht eindrückt, andererseits aber nach der Reaktion eine solche Festigkeit gewährleistet ist, daß durch den Probe- oder Betriebsdruck das Kunststoffinnenrohr sich nicht in die Ringfugenfüllung eindrücken kann.

Beim Reaktionsprozeß (des Schäumens) kann dieser auf das Innenrohr dadurch ausgeglichen werden, daß in diesem Auskleidungsrohr ein Gegendruck aufgebaut wird. Dies kann ein unter einem genügend hohen Druck stehender elastischer Schlauch aus unterschiedlichsten Werkstoffen sein. Das Innenrohr bzw. der Inliner kann aus verschiedenen Einzellängen sich zusammensetzen; die Fugen werden gegen ein Durchdringen beispielsweise des Polyurethans durch den unter Druck stehenden elastischen Schlauch abgedichtet.

Ringfuge und Innenrohr sind so ausgebildet, daß sie beiden Druckverhältnissen standhalten.

Durch Versuche kann eine Tabelle aufgestellt werden. Aus dieser Tabelle kann dann abgelesen werden, wie groß die Menge an flüssigem Schaumstoff sein muß, um den oben geschilderten Erfordernissen zu genügen. Das thermoplastische Innenrohr muß von der Wanddicke und Qualität sowohl des Kunststoffs als auch seiner Verschweißung so gewählt sein, daß es den chemischen sowie mechanischen Beanspruchungen bei Probelauf und Betrieb genügt.

Beim Stahlrohr geht man so vor, daß dieses vor der Auskleidung auf den gewünschten Druck abgepreßt wird. Entsprechend dem Druck werden nun die Außenmanteldicke sowie die Verbindungsflansche gewählt. Die Abdichtung zwischen den Flanschen kann so vorgenommen werden, daß die thermoplastische Innenauskleidung über den Flansch beispielsweise bis zu den Schraubenlöchern der Flansche gezogen wird.

Wahlweise kann auch ein thermoplastischer Ring vorgeschweißt oder eine Schweißnaht angebracht werden. Zusätzliche Dichtungen zwischen den Rohren lassen sich auf diese Weise in der Regel einsparen. Für Rohrbögen und andere Formteile gilt das vorstehend Gesagte.

Die am Innenrohr angeschweißten Abstandshalter können beispielsweise in einer Anzahl von drei Stück über den Umfang verteilt sein, in Achsrichtung einen Abstand von ca. 500 mm haben, wobei die ersten Abstandshalter in Flanschnähe vorgesehen sind.

Durch die Verwendung von individuell zu fertigenden Kunststoffrohren - sowohl hinsichtlich Durchmesser als hinsichtlich Wanddicke - ist eine stufenlose Durchmesserwahl möglich.

Trotz des Dreischichtenaufbaues und seiner zahlreichen Eigenschaften, ist das Rohr leicht und verfügt über einen dünnen Wandaufbau. Die Herstellungskosten sind gegenüber den bisher für solche Zwecke verwendeten Rohren gering. Relativ weite Stützweiten sind aufgrund aus Stahl bestehender Trägerrohre möglich.

Die Ringspaltdicke kann in erheblichen Grenzen variiert werden. Dies führt dazu, daß als Trägerrohr übliche Normrohre Anwendung finden können.

In Weiterbildung der Erfindung ist dann, wenn nicht nur die Korrosionssicherheit und das Geeignetsein für Gleitförderung sondern insbesondere die verschleißfeste Ausbildung im Vordergrund steht, erfindungsgemäß das Verbundrohr aus einem Stahlmantelrohr, einem sog. Inliner aus verschleißfestem keramischem Werkstoff und einer Verbindung zwischen Keramikrohr und Stahlmantelrohr aus einem geschäumten Kunststoff gebildet. Das Keramikrohr kann ungemein dünn, beispielsweise in 3 bis 4 mm Wanddicke ausgeführt sein.

Vorzugsweise besteht das Keramikinnenrohr aus Aluminiumoxidmaterialien mit hohem Aluminiumanteil oder aus Siliziumcarbidmaterialien. Unter dem Warennamen "Kalocer" der Schmelzbasaltwerk Kalenborn (gültiges Handbuch Seite 113) genannte Materialien sind besonders geeignet. Anstatt des Innenrohres aus Kunststoff wird also ein Rohr aus keramischen Werkstoffen mit relativ dünnen Wandung eingesetzt.

War beim Kunststoffrohr das Rohr an seinen Stirnenden flanschartig umgebördelt und diente damit zusätzlich als Dichtung, so ist dies beim Keramikrohr natürlich nicht möglich.

Wichtig ist andererseits, daß die Rohre innerhalb des Stahlrohres eng aneinandergereiht und stirnseitig abgedichtet werden, so daß beim Schäumen (hier sind auch wieder Abstandshalter zwischen Stahlrohr und Keramikrohr vorgesehen) kein Schaum in das Innere des Keramikrohres eindringen kann.

Zur Vorbereitung können die Rohrenden glatt geschliffen sein, damit sie plan aufeinander sitzen. Bandageartige Umwicklungen der Innenrohranschlüsse sind möglich.
Umwicklung der Stirnfugen oder Aufbringung eines geeigneten Klebers oder die Kombination von Kleben/Umwickeln sind möglich.

Eine beispielsweise Ausführungsform der Erfindung soll nun mit bezug auf die beiliegenden Zeichnungen näher erläutert werden. Diese zeigen in

Fig. 1 einen Längsschnitt durch das Verbundrohr:

Fig. 2 ist ein Schnitt längs der Linie A-A in Fig. 1;

Fig. 3 zeigt die Einzelheit Z der Fig. 1;

Fig. 4 ist eine Darstellung ähnlich Fig. 1 mit Keramikrohrinliner;

Fig. 5 ist ein Schnitt längs der Ebene A-A in Fig. 4;

Fig. 6 zeigt die Einzelheit Y der Fig. 4 und Fig. 7 die Einzelheit Z der Fig. 4.

Innerhalb eines üblichen, beispielsweise genormten Stahlrohres 10 mit Flanschen 18, befindet sich ein Kunststoff-Innenrohr, beispielsweise aus thermoplastischem Material, insbesondere PE. Auf das Innenrohr 12 sind unter Abstand angeordnete Abstandshalter 20 aus dem Material des Innenrohres geschweißt. Beispielsweise drei solcher Abstandshalter 20 können über den Umfang verteilt vorgesehen sein. Der Abstand zum Stahlinnenrohr nach Einbringung ist gering und liegt in der Millimetergrößenordnung. Der Ringspalt, der Ringraum oder die Ringfuge zwischen Stahlaußenrohr 10 und thermoplastischem Innenrohr 12 ist mittels PU-Schaum 14 ausgeschäumt. Es handelt sich um einen Zweikomponenten PU-Schaum, der auch ohne Lustsauerstoff bzw. Luftfeuchtigkeit aushärtet.

Wie deutlich zu sehen, kann das Innenrohr im Bereich des Flansches so weit hochgezogen sein (siehe bei 16, allerdings nicht bis zu den Flanschbohrungen), daß die Bildung einer Dichtung beim Verbinden der einzelnen Rohrteile entsteht.

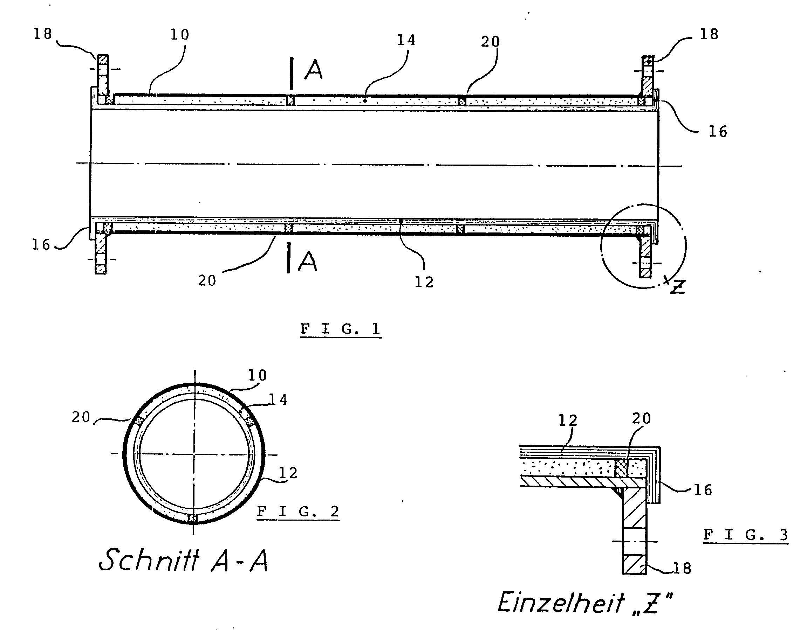

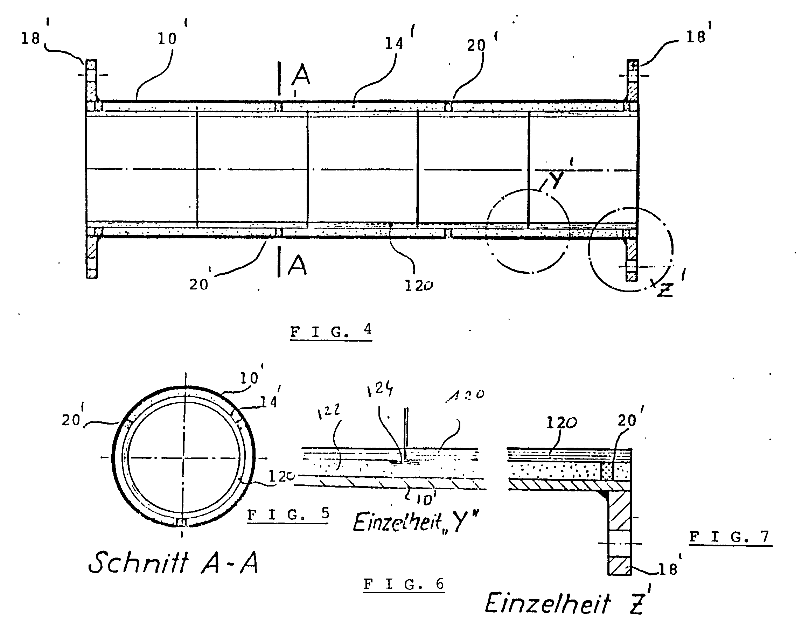

Nach Fig. 4 ist ein Stahlrohr 10' mit aufgeschweißten Schraubflanschen 18' vorgesehen, innerhalb dessen ein Keramikrohr 120 unter Zwischenschaltung von Abstandshaltern 20' angeordnet ist. Das Keramikrohr 120 ist eingeschäumt, wie auch Fig. 5 deutlich erkennen läßt. Das Keramikrohr läuft im Gegensatz zu Fig. 1 nicht bis in die Fuge sondern endet plan mit der Flanschfuge bzw. dem Flansch.

Fig. 6 zeigt, daß kürzere Rohrlängen aus Keramikrohr 120 benutzt werden. Diese können an den Stirnenden beispielsweise glattgeschliffen und plan aneinandergesetzt werden. Fig. 6 zeigt eine Umwicklung 124, die um zwei plan aufeinandersitzende Enden vorgenommen wurde. Die Umwicklung kann aus einem mit Kleber getränktem Gewebe bestehen. Durch die Kombination von Umwicklung und Kleber ist die Verbindung besonders dicht. Wichtig ist vor allen Dingen, daß der Schaum 122 etwa beim Schäumen nicht auf die Innenseite des Keramikrohres gelangen kann.

Die Einzelheit Z' zeigt Fig. 7. Das Keramikrohr 120 ist bündig mit dem Flansch 18'. Der Abstandshalter 20' ist eingeschäumt. Der Schaum ist bis auf die Stirnfläche (Flanschfläche) satt durchgetreten. Die Abdichtung auch im Flanschbereich ist also besonders gut, zumal auch im Flanschbereich die Enden der jeweiligen Keramikrohre satt aufeinandersitzen.

Keramische für industrielle Zwecke geeignete Werkstoffe wurden beschrieben, zwei beispielsweise Vertreter genannt. Die Erfindung ist aber allgemein auf Rohre aus keramischen Werkstoffen gerichtet, nicht auf diese Beispiele beschränkt.

Die Einzellängen der keramischen Werkstoffe betragen 500 bis 1500 mm.

Andere Möglichkeiten zur Verbindung der Keramikinnenrohre sind selbstverständlich eingeschlossen.

Die Längen der Keramikeinzelrohre betragen zwischen 500 und 1.500 mm. Ihre Wanddicke liegt bei 3 bis 8 mm, insbesondere 3 bis 4 mm.

Eine bekannte Polytetrafluoräthylenauskleidung eines Stahlmantelrohres verhält sich praktisch wie eine Innengummierung. Wenn sich durch die Beanspruchungen in der Praxis Beschädigungen dieser Auskleidung ergeben, wird sofort der äussere Stahlmantel angegriffen, insbesondere dann, wenn hydraulische Medien gefördert werden, welche den Stahlmantel über Korrosion oder Verschleiß stark angreifen.

Um Temperaturwechselbeanspruchungen auszugleichen, wurde zwischen Innen- und Außenrohr bereits ein elastischer Kleber (DE-PS 23 50 787) vorgesehen. Auf einen solchen Kleber kann verzichtet werden. Die Polyurethanschaumschicht gleicht solche Beanspruchungen aus.

Wird eine Polytetrafluoräthylenschicht dagegen innen in ein Stahlrohr eingebracht, so sind umfangreiche Vorbehandlungen des Stahlrohres erforderlich, Vorbereitungen, die erfindungsgemäß nicht anfallen.

Erfindungsgemäß wird also das Innenrohr mittels einer ungewöhnlich leichten, chemisch beständigen Schicht so arretiert, daß Rohr an Rohr genau paßt und eine doppelte Sicherheit gegen eventuelle chemische Angriffe vom Fördergut her im Stahlmantel gewährleistet ist. Gegenüber dem bekanntgewordenen Stand der Technik wird erfindungsgemäß ein innen glattes Rohr angegeben, welches außen sehr steif ist und bei dem selbst dann, wenn das Innenrohr beschädigt wird, das Außenrohr keinem Korrosionsangriff ausgesetzt wird.

## Ansprüche

1. Stahlmantelrohr mit einem Inliner aus Kunststoff, insbesondere aus einem thermoplastischen Rohr und einer Zwischenschicht zwischen dem Inliner und dem Stahlrohr, dadurch gekennzeichnet, daß für eine korrosionssichere gleitfördernde und verschleißfeste Ausbildung bei hohen Betriebsdrükken die Zwischenschicht aus einem geschäumten Kunststoff besteht.

2. Rohr nach Anspruch 1, dadurch gekennzeichnet, daß die Zwischenschicht aus geschäumtem Polyurethan gebildet ist und daß das Innenrohr aus Polyurethan besteht.

3. Rohr nach einem der vorhergehenden Ansprüche, gekennzeichnet durch Aufteilung der statischen Funktion des Verbundrohres auf den Stahlmantel (10) und den ausgeschäumten Ringspalt und der Antiverschleiß- bzw. Korrosionsschutzfunktion des Verbundrohres auf das thermoplastische Innenrohr (12).

4 . Rohr nach einem der vorhergehenden Ansprüche, dadurch gekennzeichnet, daß zur dichten Verbindung je zweier Rohrteile an das Innenrohr (Inliner) ein stirnseitiger Bund bzw. Kragen oder ein Schweißwulst aus thermoplastischem Material zur Bildung einer Dichtung beim Verbinden der einzelnen Rohrteile angesetzt ist.

5. Rohr nach Anspruch 2 bis 4 , dadurch gekennzeichnet, daß die Zwischenschicht aus einem Zweikomponenten-Polyurethanschaum gebildet ist, der auch ohne Luftsauerstoff oder Luftfeuchtigkeit aushärtet.

6 . Rohr nach einem der vorhergehenden Ansprüche, dadurch gekennzeichnet, daß zur Abdichtung zwischen den Flanschen (18) die thermoplastische Innenauskleidung über den Flansch hochgezogen ist (bei 16).

7. Stahlmantelrohr mit einem Inliner aus einem verschleißfesten keramischen Werkstoff zum Schutz gegen chemische Angriffe und Korrosion bei hohen Betriebsdrucken und einer Zwischenschicht zwischen Keramikrohr und Stahlrohr, dadurch gekennzeichnet, daß die Zwischenschicht aus einem geschäumten Kunststoff besteht.

8. Rohr nach Anspruch 7, dadurch gekennzeichnet, daß die Wanddicke des Keramikinnenrohres 3 bis 8 mm, insbesondere 3 bis 4 mm, beträgt.

9. Rohr nach Anspruch 7 und 8, dadurch gekennzeichnet, daß das Keramikinnenrohr (120) aus Aluminiumoxidmaterialien mit hohem Aluminiumanteil oder aus Siliziumcarbidmaterialien besteht.

10. Rohr nach einem der Ansprüche 7 bis 9, dadurch gekennzeichnet, daß das Keramikrohr aus kürzeren Einzelstücken besteht, die satt stirnseitig aneinander anliegend in die Stahlaußenrohre eingeschoben und stirnseitig abgedichtet sind.

11. Rohr nach Anspruch 10, dadurch gekennzeichnet, daß die Abdichtung der Rohrstirnenden wahlweise durch Kleben, durch Umwickeln oder durch eine Kombination von Umwickeln und Kleben der Stirnfugen herbeigeführt ist.

12. Rohr nach Anspruch 11, dadurch gekennzeichnet, daß die Umwicklung aus in Kleber getränktem Gewebe besteht.

F I G. 1

F I G. 2

Schnitt A - A

F I G. 3

Einzelheit „Z"

EP 0 307 609 A1

F I G. 4

Schnitt A-A

F I G. 5

Einzelheit „Y"

F I G. 6

Einzelheit Z'

F I G. 7

EP 0 307 609 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-U-7 815 282 (DYCKERHOFF & WIDMANN) * Schutzanspruch; Figur 1 * | 1 | F 16 L 58/10 |
| A | | 2,5 | |
| | --- | | |
| A | DE-A-3 603 597 (ZICKERMANN) * Anspruch 1 * | 1 | |
| | --- | | |
| A | DE-A-3 315 819 (FREYTAG GMBH & CO KG) * Zusammenfassung; Anspruch 1 * | 1,10 | |
| | --- | | |
| A | GB-A-1 416 730 (USS ENGINEERS) * Anspruch 1 * | 7-9 | |
| | --- | | |
| A | CH-A- 519 675 (ECKARDT AG) * Figur; Patentanspruch * | 6 | |
| | --- | | |
| A | GB-A-2 041 147 (FUSION EQUIPMENT) ----- | | |

**RECHERCHIERTE SACHGEBIETE (Int. Cl.4)**

F 16 L 58/00
F 16 L 55/00

Der vorliegende Recherchenbericht wurde für alle Patentansprüche erstellt

| Recherchenort | Abschlußdatum der Recherche | Prüfer |
|---|---|---|
| BERLIN | 14-11-1988 | SCHAEFFLER C.A.A. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

..............................................................
& : Mitglied der gleichen Patentfamilie, übereinstimmendes Dokument